# EUROPEAN PATENT APPLICATION

(11) **EP 3 318 623 A1**
(43) Date of publication of application: **09.05.2018**
(21) Application number: 17200461.6
(22) Date of filing: 07.11.2017
(51) Int. Cl.: C12C 13/10, F16K 17/00, B67D 1/08, B67D 1/12

(54) **PRESSURE RELIEF VALVE ASSEMBLY FOR CONTAINERS FOR FLUIDS, AND CONTAINER PROVIDED WITH SUCH VALVE ASSEMBLY**

(30) Priority: 08.11.2016 IT 201600112052
(71) Applicant: Gruppo Bisaro - Sifa S.r.l., 33095 S. Giorgio della Richinvelda (PN) (IT)
(72) Inventor: BISARO, Gianfranco, 33095 S. Giorgio della Richinvelda (PN) (IT); COLUSSI, Patrik, 33072 Casarsa della Delizia (PN) (IT)
(74) Representative: Bonatto, Marco

(57) **Abstract**

The pressure relief valve assembly (**11**, **11**', **11**", **11**^{III}) according to the invention, for containers (1) for containing fluids like for example wine casks, beer kegs or other pressurised beverage containers, comprises an abutment body (13) and a closure member (**15**). The abutment body (13, 13', 13") forms a passage (17) arranged to allow fluids to flow out from inside the pressurised container (**3**). The closure member (**15**) is arranged to reversibly open and close the passage (**17**), opening when the pressure on a predetermined area of the closure member (**15**) is equal to or greater than a calibration pressure and elastically deforms the closure member (**15**), and by closing itself, operated at least by the elastic return forces internal to the closure member itself (**15**) when the pressure on the predetermined area of the closure member (**15**) is less than the calibration value.

## Description

### Field of the invention

The present invention concerns a pressure relief valve assembly particularly suitable for being mounted on containers for pressurised fluids, like for example casks for sparkling wines, champagnes, beers, cider, other fizzy or sparkling beverages, and a pressurised container provided with such a valve assembly.

Such a pressure relief valve can clearly also be mounted on containers for liquids like for example fruit juices or still wines, which in normal conditions are not fizzy or pressurised but can become fizzy for example due to anomalous refermentation occurring after packaging or bottling, or for beverages deliberately made to referment after bottling or keg filling.

### State of the art

Draught beer has for some time been supplied to final sellers in barrels or kegs having capacities generally comprised between **5-40** litres.

For many decades kegs made of sheet metal have been widespread; recently, beer kegs made of plastic, for example based on polyethylene terephthalate (PET) that are blow-moulded, have becoming common as well.

Pressurised beer kegs - typically to be sold as "draught" beer - equipped with a pressure relief valve to reduce possible and dangerous internal overpressures due to various factors, like for example a fermentation that proceeds even after packaging, accidental impacts, overheating, are currently known.

Reducing the anomalous internal overpressures is particularly important in the case of blown PET kegs, or more generally ones made of plastic: whereas indeed the explosion pressures of a metal keg are usually around **25-30** relative bars, those in a keg made of synthetic resin are generally less than **10-12** relative bars, and the current safety standards impose a recommended maximum use pressure of **3.5** relative bars for beer kegs.

Some types of these valves, like for example that described in patent US5544779, are provided with a diaphragm that breaks beyond a limit pressure, allowing the excess gases to be vented.

These valves are thus substantially "fuses" having irreversible opening. If, after they have opened, it is not transferred quickly, the content will most probably deteriorate or be contaminated.
Moreover, for large deliveries, kegs for beer and other fizzy beverages are generally packaged in pallets, piling many kegs arranged standing up and in layers.

Thanks to the pressure inside them, kegs made of plastic can also support the weight of many overlapping layers.

However, after a "fuse" valve has opened, the pressure inside the keg becomes atmospheric pressure, is unable to counteract the weight of the kegs on top and the keg collapses.

The opening of the valve of a single keg can also thus seriously jeopardise the stability of an entire pallet, with the risk of causing other collateral damages such as consequently damaging other kegs, causing dangerous breakdowns and movements endangering people and things in a warehouse or during transportation.

Other types of known valves have a rigid closure member, shaped like a mushroom or ball, kept closed by a return spring.

Possible internal overpressures, overcoming the thrust of the spring, make the closure member move back, opening a venting duct.

When the pressure in the keg has gone back below the calibration value, the valve closes by itself.
An example of this second type of valve is described in patent US5415329.

Since they have reversible opening and closing, this second type of valve does not have any drawbacks of ("fuse-type") diaphragm-breaking valves, but on the other hand have a greater number of components, a more complex and expensive mechanical construction and awkward assembly.

A purpose of the present invention is to avoid the aforementioned drawbacks and in particular provide a pressure relief valve for pressurised containers, like for example kegs for distributing wine, sparkling wine, champagne, beer or other fermented, fizzy or pressurised beverages, which can open and close automatically and reversibly, and has a relatively simple and/or inexpensive mechanical construction.

### Summary of the invention

Such a purpose is achieved, in a first aspect of the present invention, with a valve assembly having the features according to claim **1.**

In a second aspect of the invention, such a purpose is achieved with a closing assembly having the features according to claim **7.**

In a third aspect of the invention, such a purpose is achieved with a closing assembly having the features according to claim **8.**

In a fourth aspect of the invention, such a purpose is achieved with a closing assembly (**9**) to reversibly close and open a fluid container (**1**) like for example a wine cask, beer keg or other pressurised and non-pressurised beverage container, where:
- the fluid container (**1**) comprises a pressure relief valve assembly (**1**) having the features according to one or more of claims **1-7** and a hollow body (**3**) in turn comprising a mouth portion (**5**) which forms a neck (**7**) having a substantially tubular shape;
- the closing assembly (**9**) is arranged to fix onto the neck (**7**);
- the pressure relief valve (**11**) is arranged on the closing assembly (**9**) so that the diaphragm (**16, 16'**, **16**", **16^{III}**) opens and closes deforming according to a direction that is transversal or substantially perpendicular to the axis of the neck (**7)**.

In a fifth aspect of the invention, such a purpose is achieved with a container for pressurised fluids having the features according to claim **12.**

Further features of the invention are the object of the dependent claims.

The advantages that can be obtained with the present invention will become clearer to those skilled in the art from the following detailed description of some particular non-limiting embodiments, illustrated with reference to the following schematic figures.

### List of Figures

Figure **1** shows a perspective view, partially in section, of a keg for storing pressurised beverages according to a first embodiment of the invention;
Figure **2** shows a perspective view of the pressure relief valve assembly of the keg of Figure **1****;**
Figure **3** shows a section view according to the plane III-III of the pressure relief valve assembly of Figure **2****;**

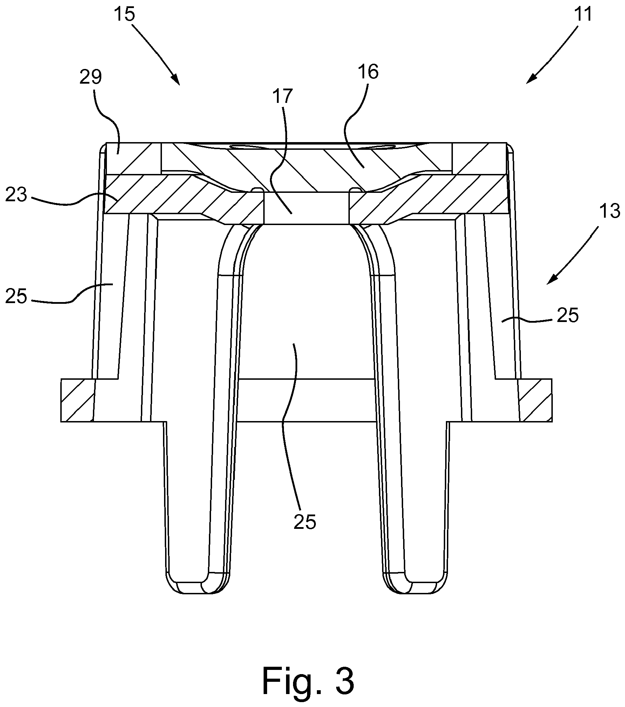

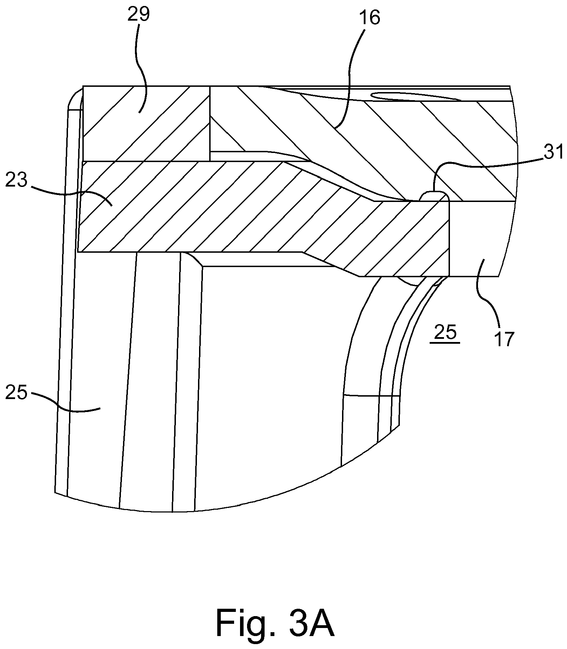

Figure **3**A shows a first enlarged detail, partially in section according to the plane III-III, of the view of Figure **3****;**

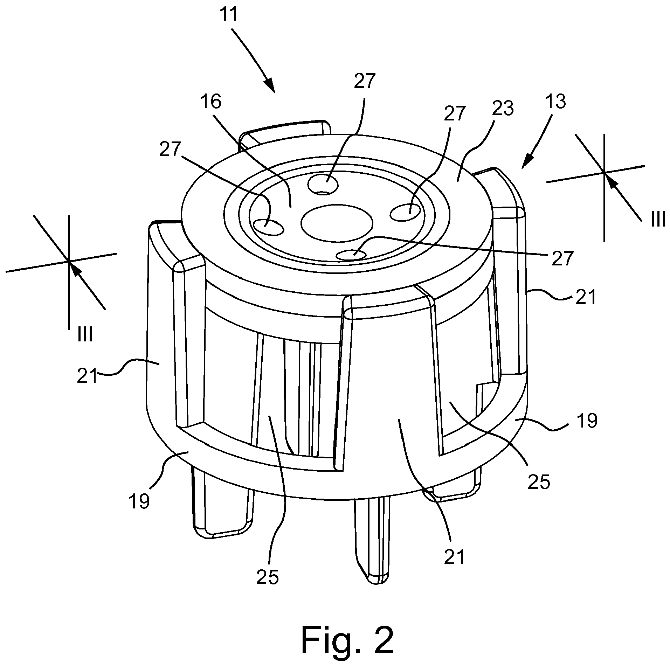

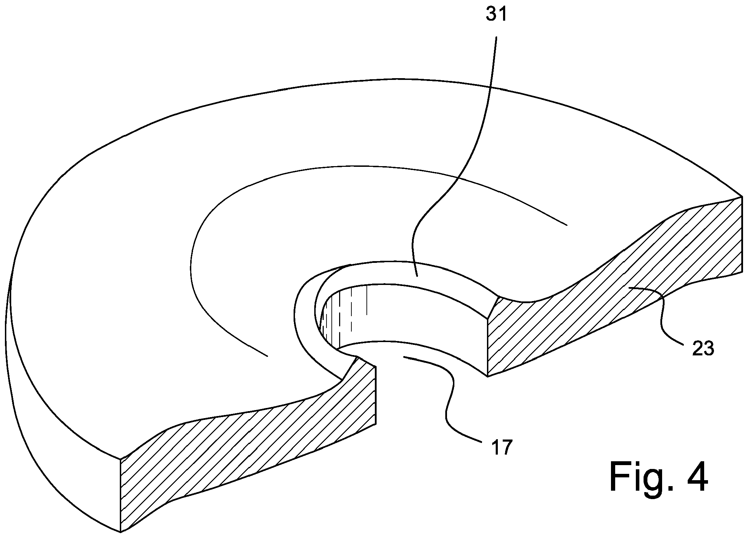

Figure **4** shows the perspective view, partially in section according to the plane III-III, of a second enlarged detail of the second annular frame of the abutment body of the pressure relief valve assembly of Figure **2****;**

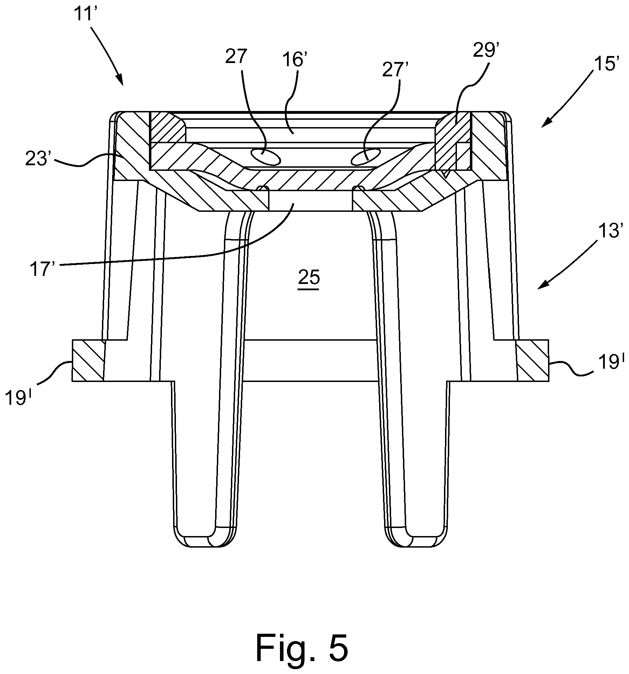

Figure **5** shows a section view according to a plane III-III of the pressure relief valve assembly according to a second embodiment of the invention;

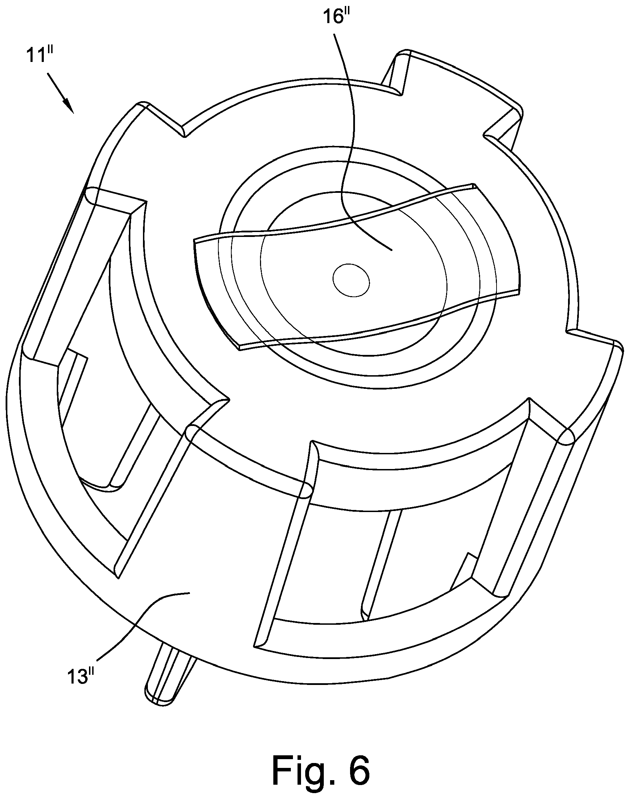

Figure **6** shows a perspective view of a pressure relief valve assembly according to a third embodiment of the invention;

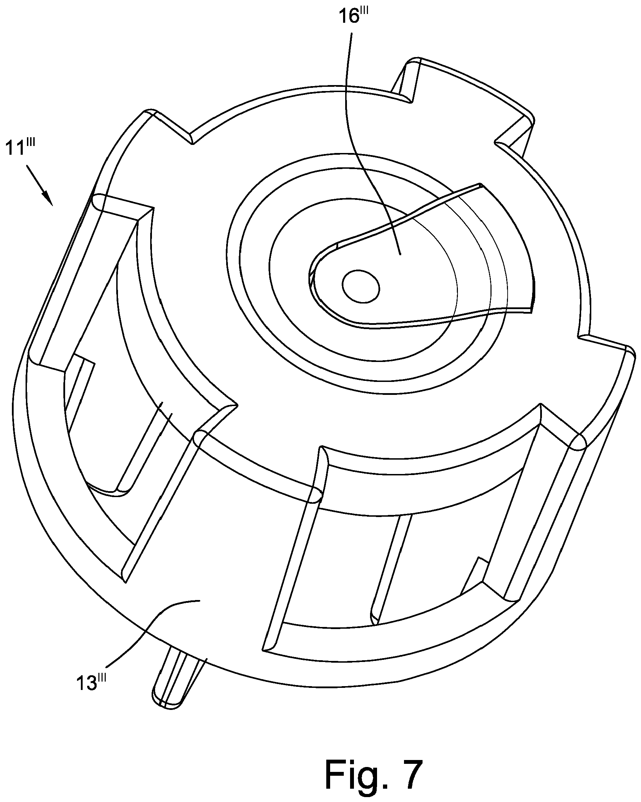

Figure **7** shows a perspective view of a pressure relief valve assembly according to a fourth embodiment of the invention.

### Detailed description

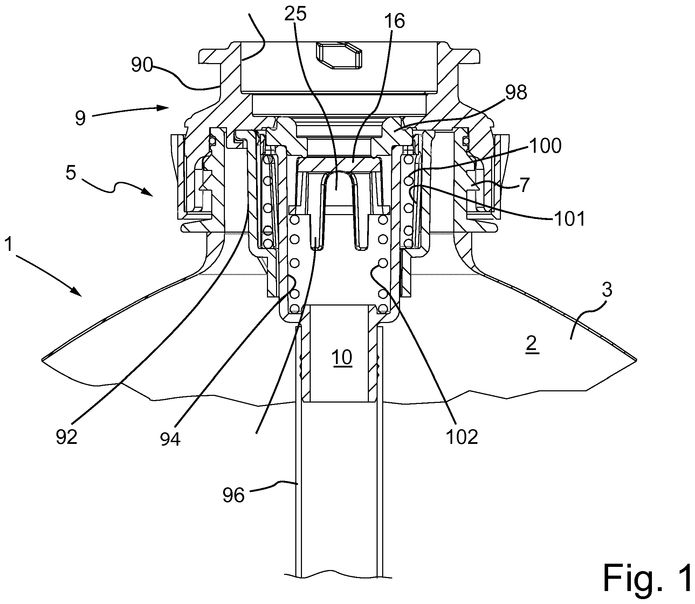

Figures **1-4** relate to a fluid container, like for example a keg for containing sparkling wine that may or may not be on tap, champagne, draught beer, cider or other fizzy beverages, or even non-fizzy beverages or drinkable fluids that are normally not pressurised like for example fruit juices and still wines, according to a particular embodiment of the invention, indicated with reference numeral **1.**

The keg **1** comprises a hollow body **3** that forms a storing chamber **2** inside it that is configured to contain wine, beer or another drinkable fluid, possibly pressurised, and which can have a more or less cylindrical, prismatic, conical or pyramid-like overall shape.

The hollow body **3** can have an internal capacity comprised for example between **5-50** litres, or between **5-20** litres, and can for example be made of a suitable plastic material, for example blow-moulded, or even sheet metal.

More in particular the hollow body **3** can for example be based on polyethylene terephthalate (PET), polyethylene naphthalate (PEN) or other polyesters or polyolefin, polyamide, polylactate (PLA), polyethylene furanoate (PEF) or a combination thereof.

As shown in Figure **1****,** the body **3** can have a more or less oblong shape and form a mouth portion **5** at an end thereof, through which the body **3** can be filled or emptied.

The mouth portion **5** can for example comprise a neck **7,** possibly flanged or threaded, on which a closing assembly **9** is mounted, which can for example form a fitting to connect to a filling or emptying tube, to fill the keg **1** or withdraw the content from it, respectively.

For this purpose, the closing assembly **9** forms a filling and emptying duct **10** inside it through which the storing chamber **2** can be filled and emptied.

Preferably, the closing assembly **9** is provided with one or more filling and dispensing valves, each of which allows the keg to be filled and emptied, through a suitable fitting, for example of the *per se* known type, keeping a sufficient overpressure inside it with respect to the external environment, for example comprised between **0-3.5** relative bars - suitable for containing for example sparkling wines or beers - or between **0-10** relative bars, suitable for containing for example champagnes and other sparkling wines.

In some embodiments the closing assembly **9** can be arranged to maintain an overpressure comprised for example between about **1,5-9** relative bars, or between **2-9** relative bars or even between **3-7** relative bars inside the container.

As shown in Figure **1****,** the closing assembly **9** can comprise a main body **90** that can for example fix to the neck **7** of the hollow body **3,** for example through one or more snap or spear fasteners.

The closing assembly can for example be provided with a first and a second filling and dispensing valve.

For this purpose, the main body **90** can house a first **92** and a second tubular body **94** inside it.

The second tubular body **94** is at least partially inserted in the first tubular body **92** and can slide axially with respect to it.

The cannula **96** is slotted onto the second tubular body **94;** the second tubular body **94** thus has the function of joining the cannula, amongst other things.

The first tubular body **92** can be fixedly connected to the main body, for example screwed, welded or fixed by interlocking.

The first filling/emptying valve preferably comprises a substantially annular closure member **98** and can for example also comprise a first return spring **100.**

The main body **90,** and the tubular bodies **92, 94** can for example be made of metal or a relatively rigid plastic material.

The substantially annular closure member **98** is preferably fixedly connected to the second tubular body **94.**

The second filling/emptying valve comprises a second closure member **11, 16** and can for example also comprise a second return spring **102.**

The two springs **100, 102** can for example be metal coil springs.

The first return spring **100** rests at one end against a shoulder formed in the first tubular body **92** and pushes the second tubular body **94** and the annular gasket **98** in abutment against an annular shoulder formed on the main body **90.**

The second return spring **102** rests at one end against a shoulder formed in the second tubular body **94** and pushes the second closure member **11, 16** in abutment against an annular shoulder formed for example on the annular gasket **98,** closing the central hole of the gasket **98.**

The closing assembly **9** can advantageously be provided with a pressure relief valve assembly, indicated with the overall reference numeral **11** and in turn comprising an abutment body **13** and a closure member **15 (**Figures **2-7****).**

According to an aspect of the present invention, the abutment body **13** forms at least one passage **17, 17'** arranged to allow the outflow of wine, beer or other fluids from inside the body of the keg **3.**

Such a passage **17, 17'** can for example have the shape of a substantially circular through hole (Figures **3****,** **5**).

The closure member **15** is arranged to reversibly open and close the passage **17,** opening when the pressure on a predetermined area of the closure member **15** itself is above a calibration value and such as to elastically deform the closure member **15,** and closing, operated at least by the elastic return forces internal to the closure member **15** itself when the pressure on the predetermined area of the closure member **15** is below the aforementioned calibration value.

Such a calibration value in the case of draught beer kegs can for example be comprised between **4-6** relative bars - suitable for example for containing beverages such as beers and sparkling wines or comprised between **7-15** relative bars, or between **8-12** or **8-11** relative bars for containing for example champagne and other sparkling wines.

Such a calibration value in the case of draught beer kegs can for example be roughly equal to or greater than **4** relative bars.

Advantageously, the closure member **15** comprises a diaphragm **16** arranged to reversibly open and close the passage **17,** opening when the pressure on a predetermined side of the diaphragm - preferably a portion of the larger face facing towards the inside of the body **3** of the container - is greater than a predetermined calibration pressure and closing, operated at least by the elastic return forces internal to the diaphragm **16** itself, when the pressure on the predetermined side of the diaphragm is less than the calibration value.

In the present description, the larger side or face of the diaphragm **16** or, more generally, of the closure member **15,** which faces or in any case is in fluid communication with the inside of the body **3** of the container and with the fluid contained in it, is conventionally indicated for the sake of brevity as "side facing towards the inside of the container or of the body **3"** and "face facing towards the inside of the container or of the body **3".**

Like in the embodiment of Figures **2-7****,** the diaphragm **16** can have an overall shape like a disc or bowl having more or less accentuated concavity; however, in other embodiments the diaphragm **16, 15', 15"** can have different shapes, like for example the shape of a substantially oblong elastic tongue fixed at both ends to the abutment body **13** (Figure **6**), or of a substantially oblong elastic tongue free at one of its ends and fixed at its other end to the abutment body **13** (Figure **7**).

Like in the embodiment of Figures **2-7****,** the abutment body **13** can have an overall shape like a cup, approximately cylindrical or frusto-conical, and form an open lower base and an upper base reversibly closed or opened by the diaphragm **16, 15', 15"** itself.

The lower base can be delimited for example by a first annular frame **19** connected to the upper base through a plurality of legs **21,** which in the embodiments of Figures **2-7** form the flanks of the abutment body **13.**

Such flanks preferably form one or more openings **25** that allow the beverage or other fluid to be contained in the keg **1** to pass through the valve **11** in the filling and/or drawing step.

The upper base of the body **13** can also comprise a second annular frame **23, 23',** which can surround the diaphragm shutter **16** (Figure **5**) or in any case extend around it (Figure **2**).

Preferably, the abutment body **13** is made of a material substantially more rigid than that which forms the diaphragm **16.**

For this purpose, the abutment body **13** can preferably be made of polycarbonate (PC) or another suitable plastic material, or a suitable metallic material; the diaphragm **16** can be made completely of one or more elastomeric materials, like for example ARNITEL ® or other thermoplastic elastomers (TPE), or even like a composite assembly comprising a more internal core of a more rigid plastic material or of metal, for example spring steel, surrounded or coated by suitable sealing edges of a softer elastomeric material, possibly co-moulded or glued on the more rigid inner core.

Advantageously, the diaphragm **16** is made of an elastomer having an elastic modulus equal to or less than **60** MPa, preferably comprised between **15-60** MPa, more preferably between **20-40** Mpa and even more preferably between **23-28** Mpa.

Advantageously, the diaphragm **16** is made of an elastomer having a hardness preferably comprised between **10-80** ShoreD, more preferably comprised between **20-70** Shore D, more preferably comprised between **20-30** Shore D and even more preferably comprised between **23-27** Shore D.

The diaphragm **16** can have an average thickness for example comprised between **0.5-8** millimetres, between **0.7-5** millimetres, between **0.8-5** millimetres millimetres, and/or comprised between **0.05** and **0.4** times the diameter of the diaphragm itself, and more preferably comprised between **0.12-0.2** times the diameter of the diaphragm itself.

Advantageously, through the thickness of the diaphragm **16** one or more holes or other through openings **27** are obtained, through which the excess gases and liquids, when the valve **11, 11'** opens, can vent towards the outside of the hollow body **3** reducing the pressure inside the container **1** itself.

The closure member **15** preferably comprises a third perimeter frame **29** that surrounds the diaphragm **16,** is fixed to it and is made of a material substantially more rigid than the diaphragm **16** itself; for this purpose, the third perimeter frame can for example be made of the same material as the abutment body **13.**

Like in the embodiment of Figure **3****,** the third perimeter frame **29** can advantageously have substantially the same thickness as the diaphragm **16** and thus end flush with it forming a single smooth upper surface, thus reducing the dirtying of the valve **11** and facilitating the cleaning thereof.

Alternatively, like in the embodiment of Figure **5****,** the third perimeter frame **29** can have a thickness substantially greater than the diaphragm **16** so as to lock it with a mechanical abutment not only in the radial direction but also in the axial direction (i.e. with reference to Figure **5****,** also according to an up-down direction).

In an embodiment that is not shown, the third perimeter frame **29** has a thickness substantially greater than the diaphragm **16** and forms a single piece integral with the second annular frame **23, 23'.**

Advantageously, the diaphragm **16,** or in any case the closure member **15,** when stressed by a pressure below the calibration pressure, presses against the abutment body **13,** in particular against the mouth of the passage **17,** so as to ensure the closure thereof.

For this purpose, the closure member **15** is advantageously produced separately from the abutment body **13** so that, when it is then mounted on it, the diaphragm at rest would theoretically penetrate the upper base of the body **13** and in reality deforms and, due to the elastic return forces inside the diaphragm itself, presses against the body **13,** closing the opening **17** with force, when the pressure that biases the face of the diaphragm facing towards the inside of the container or of the body **3"** reaches or exceeds the aforementioned calibration pressure.

For this purpose, the diaphragm **16** can be formed, assembled to the frame **29, 29'** or co-moulded on it and then the frame **29, 290** can be fixed, for example welded or glued, on the body **13.**

Advantageously, like in the embodiment of Figures **1-4****,** the pressure relief valve assembly **11** or at least its closure member **15** forms the second closure member of the aforementioned second filling/emptying valve.

In other embodiments that are not shown the pressure relief valve assembly **11** or at least the closure member **15** thereof can form the closure member of the aforementioned first filling/emptying valve.

An example of possible operation of the keg **1** is now described.

In order to fill the keg **1** with the beverage or other product to be stored or dispensed it is possible to open only the second filling/dispensing valve drawing back the whole of the pressure relief valve **11,** including the closure member **15** and the abutment body **13,** allowing the hollow body **3** to be filled through the cannula **96.**

In order to avoid the undesired development of foam during the filling with beverages like for example beer, the keg **1** can be filled with the closing assembly arranged lower down and the bottom of the hollow body **3** arranged higher up, preferably with the hollow body vertical, opening both the first and the second filling/dispensing valve, and introducing the beverage directly in the storing chamber **2** through the first filling/dispensing valve and making the air and other possible gases flow out from the chamber **2** through the cannula **96** and the second filling valve; for this purpose, a suitable fitting makes both the annular closure member **98** and the closure member/pressure relief valve **11** draw back, detaching them from their abutment seats, and the beer or other liquid to be packaged can reach the storage cavity **2** through suitable openings **101** formed for example on the flanks of the first tubular body **92.**

Once filling has ended, the two springs **100, 102** push the annular closure member **98** and the closure member/pressure relief valve **11** in abutment against the respective seats, closing both the first and the second filling valve.

When the pressure inside the container **1** exceeds the calibration pressure, while both the first and the second filling valves remain closed, i.e. although the springs **100, 102** keep the annular closure member **98** and the closure member/pressure relief valve **11** pressed in abutment against the respective seats formed on the main body **90** and on the annular gasket **98,** the diaphragm **16** of the pressure relief valve **11** deforms, detaching in part from the abutment body **13,** opens the passage **17** and allows the gases and other excess fluids, like for example the food product originally contained in the container **1,** to come out from the container **1** and vent into the external environment through the openings **27** reducing the pressure inside it.

When the internal pressure has returned below the calibration pressure, the elastic return forces inside the diaphragm **16** take it back into abutment against the mouth of the passage **17,** closing it and thus again isolating the wine, beer or other fluid present in the container **1** from the external environment.

By closing automatically after having released the excess gases, the pressure relief valve **11** prevents the fluid present in the container **1** from deteriorating due to prolonged contact with the external environment, unlike what happens with "fuse" type pressure relief valves.

It also suffices to think only of the case of beer or other fizzy beverages that, if exposed even for a few tens of minutes to atmospheric pressure, lose most or all of their fizz and thus cannot be sold.

In order to increase the seal of the pressure relief valve **11,** on the abutment body **13** at least one sealing projection **31** is advantageously formed that surrounds the mouth of the opening **17** and presses against the diaphragm **16** when the valve **11** is closed.

The sealing projection **31** can for example be shaped like a crest or rib closed on itself for example in a loop that completely surrounds the mouth of the opening **17,** as shown in Figures **3a****,** **4****.**

The cross sections of the crest or other sealing projection **31** can for example be semi-circular, oval or in any case rounded (Figure **3**A) or form a sharp top edge, or in any case have a pointed top or even have substantially triangular cross sections (Figure **4**)

Forming an accentuated continuous projection, the sealing projection **31** penetrates more deeply in the softer material of the diaphragm **16** at the same time concentrating the contact pressures, and thus reduces when it does not entirely eliminate the leakages through the valve **11.**

From the above description it can clearly be seen how the pressure relief valve **11** has a very simple mechanical construction; indeed, it can be made with much less components with respect for example to the known valves described in document US5415329**.**

The housing seats of the closure member **15** are much simpler and it is much easier to automate the assembly process of the valve **11** and more generally of the closing assembly **9.**

The number of metallic springs present in the container **1** and in particular in the closing assembly **9** is reduced and this, as well as reducing the overall costs and simplifying the production of the valve **11, 11'** facilitates the disposal or recovery thereof.

It should moreover be noted that the valve **11** and the diaphragm **16** thereof act both as filling/dispensing valve and as pressure relief valve.

The production of the pressure relief valve **11** described above also does not require particularly complex processing or very strict tolerances.

The embodiments described above can undergo different modifications and variations without departing from the scope of protection of the present invention.

For example, a pressure relief valve **11** according to the invention can be arranged not only inside the closing assembly **9** of a keg for pressurised beverages so that the diaphragm **16** opens and closes moving according to a direction substantially coaxial to the main duct of the closing assembly **9** (Figure **1**), but also outside of the closing assembly **9,** for example fixed directly onto a wall of the body **3** of the container even far from the mouth portion **5,** or even on a flank of the neck **7** of the mouth **5.**

In particular, a pressure relief valve **11** according to the invention can be mounted for example on a flank of the neck **7** of the mouth **5** so that the diaphragm **16** opens and closes by deforming according to a direction that is transversal or substantially perpendicular to the axis of the neck **7,** possibly covered by a flange or collar of the closing assembly **9.**

The passage **17** can be not only an opening in a wall of thickness substantially less than the average width or length of the passage itself or than its inlet and outlet mouth, but also an actual duct or pipe of greater length than the average length or width of the passage sections thereof.

The sealing projection **31** can be formed not only on the second annular frame **23, 23'** but also on the diaphragm **16.**

A pressure relief valve **11** according to the invention can be mounted not only on kegs of the type with cannula but on kegs of the type with internal bag.

An example of a keg with cannula is the one described above with reference to Figure **1****.**

Kegs with bag are indeed provided with a bag of flexible material inserted in the hollow body **3.**

Since it is more rigid, the hollow body **3** supports the bag and allows the keg to remain upright without further external supports.

The beer, wine or other drinkable fluid is stored in the bag, in which the storing chamber is formed, whereas the space in the internal cavity of the hollow body **3** outside of the bag is usually filled with gas in overpressure that, when the first filling/emptying valve **98** is opened, pushes the beer, wine or other drinkable liquid out from the bag to draw it off.

Any reference in this description to "an embodiment" or "an example" means that a particular feature or structure described in relation to such an embodiment is comprised in at least one embodiment of the invention and in particular in a particular variant of the invention as defined in a main claim.

The fact that such expressions appear in various passages of the description does not imply that they necessarily refer only to the same embodiment.

Moreover, when a feature, element or structure is described in relation to a particular embodiment, it should be observed that it falls within the capabilities of the average person skilled in the art to apply such a feature, element or structure to other embodiments.

Reference numerals that differ only for different apostrophes, e.g. **21', 21", 21**^{III} unless specified otherwise indicate different variants of an element called in the same way.

Moreover, all of the details can be replaced by technically equivalent elements.

For example, the materials used, as well as the sizes, can be whatever according to the technical requirements.

It should be understood that an expression of the type "A *comprises* B, C, D" or "A *is formed by* B, C, D" also comprises and describes the particular case in which "A *consists of* B, C, D".

The expression *"A comprises an element B"* unless specified otherwise should be understood as *"A comprises one or more elements B".*

The examples and lists of possible variants of the present application should be deemed to be non-exhaustive lists.

## Claims

1. Pressure relief valve assembly (**11, 11', 11", 11^{III}**) for containers (**1**) for containing fluids such as wine casks, beer kegs or for other pressurised beverages, wherein:
- the valve assembly (**11, 11', 11"**) comprises an abutment body (**13**) and a closure member (**15**);
- the abutment body (**13, 13', 13"**) forms a passage (**17**) arranged to allow the outflow of fluids from the inside of the pressurised container (**3**);
- the closure member (**15**) is arranged to reversibly open and close the passage (**17**), by opening itself when the pressure on a predetermined area of the closure member (**15**) is equal to or greater than a calibration pressure and elastically deforms the closure member (**15**), and by closing itself, operated at least by the elastic return forces internal to the closure member itself (**15**), when the pressure on the predetermined area of the closure member (**15**) is lower than the calibration value;
- the closure member (**15**) comprises a diaphragm (**16**) arranged to reversibly open and close the passage (**17**), by opening itself when the pressure on a predetermined side of the diaphragm (**16**) is equal to or greater than the calibration pressure and by closing itself, operated at least by the elastic return forces internal to the diaphragm (**16**) itself, when the pressure on the predetermined side of the diaphragm (**16**) is lower than the calibration pressure.

2. Valve assembly (**11, 11', 11"**) according to claim **1,** wherein the diaphragm (**16, 16', 16"**) has an overall shape selected from the following group: a substantially flat or concave disc, a tab, an oblong strip, a plate or shell with a substantially polygonal profile.

3. Valve assembly (**11, 11', 11"**) according to claim **1** or **2,** wherein at least part of the diaphragm (**16, 16', 16"**) or of another type of the closure member (**15, 15', 15"**) is made of one or more of the following materials: an elastomer, possibly thermoplastic, ARNITEL ®, an elastomer based on a thermoplastic copolyester, a natural or synthetic rubber, a synthetic resin having a hardness comprised between **10-80** ShoreD, a natural or synthetic rubber, a synthetic resin having an elastic modulus equal to or lower than **60** MPa.

4. Valve assembly (**11, 11', 11"**) according to one or more claims from **1** to **3,** wherein the abutment body (**13**, **13', 13"**) is made of a material substantially more rigid than the diaphragm (**16, 16', 16"**), and having for example a hardness greater than at least **10** degrees Shore D, and for example greater than at least **20** degrees Shore D, with respect to the material of the diaphragm (**16, 16', 16"**).

5. Valve assembly (**11, 11', 11"**) according to one or more claims from **1** to **4,** wherein, when the pressure acting on a predetermined side of the diaphragm (**16**, **16', 16"**) is lower than the calibration pressure, the diaphragm is arranged to press against the abutment body (**13, 13', 13"**) in order to close the passage (**17**).

6. Valve assembly (**11, 11', 11"**) according to one or more claims from **1** to **5,** wherein, when the pressure acting on a predetermined side of the diaphragm is equal to or greater than the calibration pressure, the diaphragm (**16, 16', 16"**) is arranged to detach itself at least partially from the abutment body (**13, 13', 13"**) in order to open at least partially the passage (**17**).

7. Closing assembly (**9**) to reversibly close and open a fluid container (**1**) such as a wine cask, beer keg or for other pressurised and not pressurised beverages, where:
- the fluid container (**1**) comprises a cannula (**96**), a pressure relief valve assembly (**1**) according to one or more claims **1-6** and a hollow body (**3**) comprising in turn a mouth portion (**5**) that forms a neck (**7**) with a substantially tubular shape;
- the hollow body (**3**) forms therein a storing chamber (**2**) ;
- the cannula (**96**) is at least partially contained in the storing chamber (**2**);
- the closing assembly (**9**) is arranged to fix itself on the neck (**7**) and comprises at least a first and a second filling/emptying valve, each of which arranged to reversibly open and close the neck (**7**) and allow the storing chamber (**2**) be filled and emptied;
- the first filling/emptying valve is arranged to allow the inflow in the storing chamber (**2**) of a liquid to be contained, and the outflow of the liquid to be contained from the storing chamber (**2**) towards the outside of the container (**1**) without passing through the cannula (**96**);
- the second filling/emptying valve is arranged to allow a liquid to be contained to inflow in the storing chamber (**2**) of, and the liquid to be contained to flow out from the storing chamber (**2**) towards the outside of the container (**1**) by passing through the cannula (**96**);
- at least the closure member (**15**) of the pressure relief valve assembly (**1**) forms at least part of the closure member of the first and/or of the second filling/emptying valve.

8. Closing assembly (**9**) to reversibly close and open a fluid container (**1**) such as a wine cask, beer keg or for other pressurised and not pressurised beverages, where:
- the fluid container (1) comprises a containing bag, a pressure relief valve assembly (**1**) according to one or more of claims **1-6** and a hollow body (**3**) in turn comprising a mouth portion (**5**) that forms a neck (**7**) with a substantially tubular shape;
- the containing bag forms therein a storing chamber and is contained in the hollow body (**3**);
- the closing assembly (**9**) is arranged to fix itself on the neck (**7**) and comprises at least a first filling/emptying valve arranged to reversibly open and close the neck (**7**) and allow the storing chamber (**2**) to be filled and emptied;
- at least the closure member (**15**) of the pressure relief valve assembly (**1**) forms at least part of the closure member of the first and/or of the second filling/emptying valve.

9. Closing assembly (**9**) according to claim **8,** wherein at least part of the pressure relief valve assembly (**1**) is housed inside the first and/or the second filling/emptying valve.

10. Closing assembly (**9**) according to claim **8** or **9,** wherein:
- the first filling/emptying valve comprises a first tubular body (**92**);
- the second filling/emptying valve comprises a second tubular body (**94**);
- at least part of the pressure relief valve assembly (l) is housed inside the first (**92**) and/or inside the second tubular body (**94**).

11. Closing assembly (**9**) according to one or more claims **8-10**, wherein at least the closure member (**15**) of the pressure relief valve assembly (**1**) reversibly opens and closes the second filling/emptying valve allowing or preventing the inflow of liquid to be contained towards the storing chamber (**2**) through the cannula (**96**) or the outflow of liquid to be contained from the storing chamber (**2**) through the cannula (**96**).

12. Container (**1**) to contain fluids such as a wine cask, beer keg or for other pressurised and not pressurised beverages, comprising:
- a hollow body (**3**) that forms therein a storing chamber (**2**) arranged to contain the pressurised fluid, and moreover forms a mouth portion (**5**) through which the storing chamber (**2**) can be filled and emptied;
- a closing assembly (**9**) that allows to reversibly close and open the mouth portion (**5**) respectively allowing to maintain in the storing chamber (**2**) a certain overpressure with respect to the environment external to the container (**1**), and to fill or drain the storing chamber (**2**);
- a pressure relief valve (**11, 11', 11"**) having the features according to one or more claims **1-7,** wherein:
- the diaphragm (**16**) or other closure member (**15**) forms a face, and said face faces towards the inside of the container (**1**), faces the storing chamber (**2**) and/or is in fluid communication with the storing chamber (**2**);
- the pressure relief valve (**11, 11', 11"**) is arranged to reversibly open the passage (**17**) when the pressure acting on the face of the diaphragm (**16, 16', 16"**) or of another closure member (**15, 15', 15"**) facing the inside of the container (**1**) is equal to or greater than the calibration pressure;
- the pressure relief valve (**11, 11', 11"**) is arranged to reversibly close the passage (**17**) when the pressure acting on the face of the diaphragm (**16, 16', 16"**) or of another closure member (**15, 15', 15"**) facing the inside of the container (**1**) is lower than the calibration pressure.

13. Container (**1**) according to claim **12,** wherein the closing assembly (**9**) forms therein at least a filling and emptying duct (**10**) through which the storing chamber (**2**) can be filled and emptied, and the pressure relief valve (**11, 11', 11"**) is arranged to reversibly open and close the at least one filling and emptying duct (**10**).

14. Container (**1**) according to claim **13,** wherein the pressure relief valve (**11, 11', 11"**) is arranged inside and/or along the filling and emptying duct (**10**)**.**

15. Container (**1**) according to claim **13** or **14,** wherein:
- the mouth portion (**5**) forms a neck (**7**) with a substantially tubular shape;
- the pressure relief valve (**11**) is arranged on a side of the neck (**7)** in such a way that the diaphragm (**16**, **16', 16", 16^{III})** opens and closes with deformation according to a direction that is transversal or substantially perpendicular to the axis of the neck (**7)**.
